# EUROPÄISCHE PATENTSCHRIFT

(11) **EP 1 838 981 B1**
(45) Veröffentlichungstag und Bekanntmachung des Hinweises auf die Patenterteilung: **15.05.2013**
(21) Anmeldenummer: 06706255.4
(22) Anmeldetag: 17.01.2006
(51) Int. Cl.: F16J 15/32, F02F 11/00

(54) **DICHTUNGSANORDNUNG**
SEAL ARRANGEMENT
DISPOSITIF D'ETANCHEITE

(30) Priorität: 22.01.2005 EP 05001299
(43) Veröffentlichungstag der Anmeldung: 03.10.2007
(73) Patentinhaber: AB SKF, 415 50 Göteborg (SE)
(72) Erfinder: KURTH, Jürgen, D-51519 Odenthal (DE); REIF, Michael, D-51063 Köln (DE)
(74) Vertreter: Kohl, Thomas
(86) Internationale Anmeldenummer: PCT/EP2006/000350
(87) Internationale Veröffentlichungsnummer: WO 2006/077067

(56) Entgegenhaltungen:
- EP-A- 0 727 575
- EP-A- 1 026 428
- DE-A1- 10 024 026
- DE-A1- 10 102 241
- DE-A1- 10 215 187
- US-A1- 2004 195 776
- HEINE S ET AL: "ANWENDUNG VON THERMOPLASTEN ZUR ABDICHTUNG AN KFZ-MOTOREN" ATZ AUTOMOBILTECHNISCHE ZEITSCHRIFT, FRANCKH., STUTTGART, DE, 1997, Seiten 54-59, XP000687305 ISSN: 0001-2785

## Beschreibung

Die Erfindung betrifft eine Dichtungsanordnung mit einem Dichtungselement, das an einem Trägerelement angeordnet ist, wobei das Trägerelement mit einem Gehäuse verbunden ist und wobei das Dichtungselement ein bewegliches, insbesondere rotierendes, Maschinenteil kontaktiert, um eine Ölseite gegen eine Luftseite abzudichten.

Rotatorisch und/oder translatorisch bewegte Wellen, die sich durch ein Maschinengehäuse hindurch erstrecken, wie z. B. bei einem Verbrennungsmotor, werden üblicher Weise mit einer Wellendichtung abgedichtet. Die Wellendichtung schützt die Anordnung gegen den Verlust von flüssigem Medium, z. B. Öl, sowie gegen Fremdkörper aus der Umgebung. Wenn die Gehäuseöffnung im Verhältnis zur austretenden Welle groß ist, kann eine Motorabdeckplatte eingesetzt werden, in die die Wellendichtung montiert ist.

Dichtungsanordnungen einer solchen Art sind im Stand der Technik bekannt. Die DE 199 04 862 C1 zeigt eine Dichtungsanordnung, bei der eine Dichtlippe aus Polytetraflouräthylen (PTFE) an einem Trägerelement befestigt ist. Das Trägerelement ist an einem Gehäuse festgelegt. Die PTFE-Dichtungslippe ist trichterförmig ausgebildet und kontaktiert eine Welle, um eine Ölseite gegen eine Luftseite abzudichten. Das Ausführungsbeispiel gemäß diesem Dokument zeigt eine Orientierung der PTFE-Dichtungslippe, bei der der kleinere Durchmesser der trichterförmigen Ausgestaltung an die Luftseite der Dichtungsanordnung angrenzt.

Ähnliche Ausführungsformen sind aus der DE 100 24 026 A1**,** aus der DE 102 15 187 A1 sowie aus DE 101 02 241 bekannt, wobei letztere eine Dichtungsanordnung mit einem Dichtungselement offenbart, das an einem Trägerelement angeordnet ist, wobei das Trägerelement mit einem Gehäuse verbunden ist, wobei das Dichtungselement ein bewegliches, insbesondere rotierendes, Maschinenteil kontaktiert, um eine Ölseite gegen eine Luftseite abzudichten, wobei das Dichtungselement zumindest im montierten Zustand eine trichterförmige Gestalt mit einem ersten Durchmesser an einem seiner Enden und einem zweiten, kleineren Durchmesser am anderen seiner Enden hat, und wobei das Trägerelement lösbar mit dem Gehäuse mittels eines Schnellverschlusselements verbunden ist.

Die vorbekannten Lösungen gemäß der genannten Dokumente erlauben eine relative einfache Montage der Dichtungsanordnung. Früher wurde die PTFE-Dichtlippe so orientiert, dass der kleinere Durchmesser der trichterförmigen Ausgestaltung zur Ölseite zeigte. Wenn die Dichtungsanordnung beispielsweise in einem Verbrennungsmotor montiert wird, wird ein spezielles Montagewerkzeug benötigt, um das Risiko eines Umstülpens bzw. eines Ausbeulens der Dichtungslippe zu vermeiden, was zu Unwartbarkeit der Dichtungsanordnung führen würde.

Gemäß der genannten vorbekannten Lösungen von Dichtungsanordnungen ist es notwendig, die PTFE-Dichtungslippe an das abzudichtende Maschinenteil, beispielsweise an die Welle des Verbrennungsmotors, zu drücken und dann das Trägerelement der Dichtungsanordnung am Gehäuse des Maschinenteils zu befestigen. Hierfür ist ein Aufwand nötig, der zu entsprechenden Montagekosten führt. Weiterhin ist der Austausch der Dichtungsanordnung im Falle von Verschleiß der Dichtungslippe kostenintensiv.

Der Erfindung liegt die Aufgabe zugrunde, eine verbesserte Dichtungsanordnung zu schaffen.

Die Lösung dieser Aufgabe durch die Erfindung wird durch den Gegenstand des Patentanspruchs 1 erreicht, indem die Dichtungsanordnung mit einem einzigen Dichtungselement ausgestattet ist, das an dem Trägerelement angeordnet ist, wobei das Dichtungselement zumindest im montierten Zustand eine trichterförmige Gestalt mit einem ersten Durchmesser an einem seiner Enden und einem zweiten, kleineren Durchmesser am anderen seiner Enden hat, wobei das andere Ende mit dem zweiten Durchmesser an die Luftseite der Dichtungsanordnung angrenzend angeordnet ist und wobei das Trägerelement lösbar mit dem Gehäuse mittels eines Schnellverschlusselements verbunden ist. Um eine gut gedichtete Anordnung des Trägerelements am Gehäuse sicherzustellen, ist ein statisches Dichtungselement zwischen dem Trägerelement und dem Gehäuse angeordnet sein. Mit Vorteilen auch bei der Herstellung ist dabei vorgesehen, dass das Dichtungselement und das statische Dichtungselement über eine Abdeckung bzw. Deckschicht miteinander verbunden sind, die im wesentlichen das Trägerelement an der Luftseite bedeckt.

Das Schnellverschlusselement kann ein Bajonettverschluss sein. Dieser kann eine Vielzahl sich radial erstreckender Haken aufweisen, die in Ausnehmungen passen, die vorzugsweise äquidistant entlang des Umfangs einer Bohrung im Gehäuse angeordnet sind. Bevorzugt sind dabei drei Haken vorgesehen.

Um eine präzise Zentrierung des Trägerelements relativ zum Gehäuse sicherzustellen, kann das Trägerelement in der Bohrung des Gehäuses durch zumindest einen Teil seines äußeren Umfangs zentriert werden.

Eine alternative Ausgestaltung sieht vor, dass das Schnellverschlusselement ein Schnappverbindungselement aufweist oder ist.

Das Dichtungselement besteht bevorzugt aus Polytetraflouräthylen (PTFE), das einen geringen Reibungskoeffizienten und eine gute Verschleißbeständigkeit hat. Es kann zumindest an seiner Kontaktoberfläche zu dem Maschinenteil eine Spiralnut oder dergleichen aufweisen.

Das Material der Abdeckung ist bevorzugt das Material des statischen Dichtungselements, was fertigungstechnische Vorteile bietet.

Das Trägerelement besteht bevorzugt aus Kunststoff.

Das bewegliche, insbesondere rotierende, Maschinenteil ist insbesondere die Welle eines Verbrennungsmotors.

Wie die Lösungen gemäß dem Stand der Technik ist die Dichtungsanordnung gemäß der vorliegenden Erfindung auch speziell einsetzbar zur Abdichtung der Welle eines Verbrennungsmotors oder eines Getriebes mittels einer PTFE-Dichtungslippe, wobei allerdings die Dichtungsanordnung so ausgeführt ist, dass sie in schnellerer Weise montierbar ist. Weiterhin ist bei Bedarf ein einfaches und schnelles Austauschen der gesamten Dichtungsanordnung möglich.

In der Zeichnung ist ein Ausführungsbeispiel der Dichtungsanordnung gemäß der Erfindung dargestellt.
- Fig. 1: zeigt einen Radialschnitt durch eine Dichtungsanordnung für die Welle eines Verbrennungsmotors und
- Fig. 2: zeigt schematisch die Ansicht "A" gemäß dem Pfeil in Fig. 1.

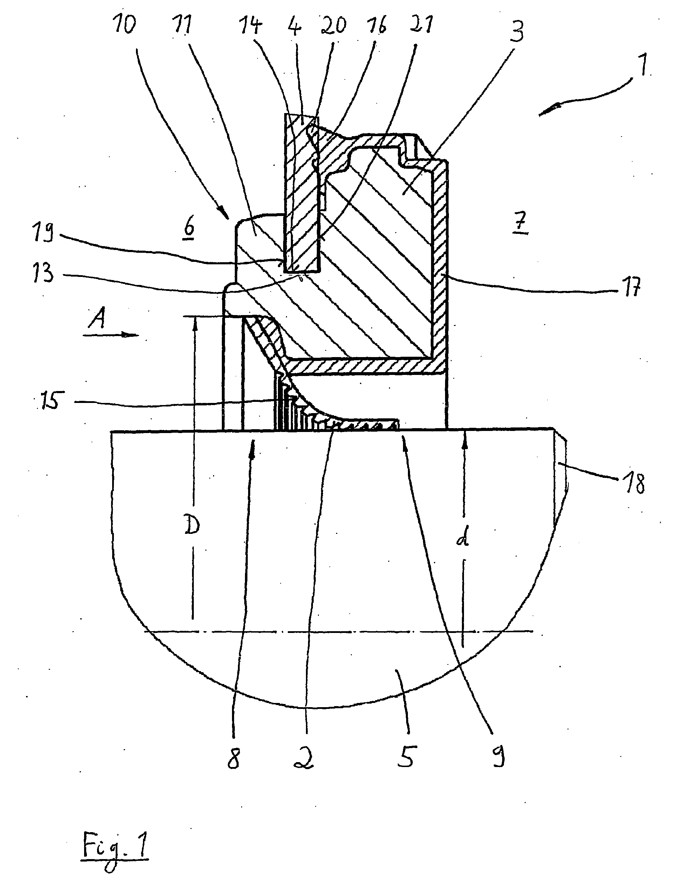

Die Figuren zeigen eine Dichtungsanordnung 1, die in ein Gehäuse 4 eines Verbrennungsmotors montiert ist. Das Gehäuse 4 kann ein Motordeckel sein, der am Gehäuse des Verbrennungsmotors angeordnet ist. Die Dichtungsanordnung im Ausführungsbeispiel muss ein bewegliches Maschinenteil 5 in Form einer sich drehenden Welle des Verbrennungsmotors abdichten. Zur Abdichtung ist ein Dichtungselement 2 vorgesehen, das aus einer PTFE-Mischung besteht und hülsenförmig ausgebildet ist, wobei es im montierten Zustand gemäß Fig. 1 eine trichterförmige Gestalt aufweist. Das Dichtungselement 2 ist an einem Trägerelement 3 befestigt. Das Trägerelement 3 ist seinerseits mit dem Gehäuse 4 verbunden.

Die Aufgabe des Dichtungselements 2 ist, das Innere des Verbrennungsmotors, d. h. die Ölseite 6, gegen die Umgebung, d. h. die Luftseite 7, abzudichten. Wie es in Fig. 1 gesehen werden kann, ist das PTFE- Dichtungselement 2 so angeordnet, dass der größere Durchmesser D des trichterförmigen Dichtungselements 2 am axialen Ende 8 des Dichtungselements 2 der Ölseite 6 benachbart ist, während der kleinere Durchmesser d am axialen Ende 9 des trichterförmigen Dichtungselements 2 an die Luftseite 7 angrenzt. Dies erleichtert die Montage des Dichtungselements 2, weil das Dichtungselement 2 in einfacher Weise auf die Welle 5 geschoben werden kann, ohne ein Risiko einzugehen, dass das Dichtungselement 2 umgestülpt oder ausgebeult wird. Eine Anfasung 18 am Ende der Welle 5 verhindert eine Beschädigung des Dichtungselements 2.

Um die Montage der gesamten Dichtungsanordnung 1 zu vereinfachen und es in einfacher Weise möglich zu machen, die Anordnung 1 bei Bedarf auszuwechseln, ist das Trägerelement 3 lösbar mittels eines Schnellverschlusselements 10 mit dem Gehäuse 4 verbunden.

Eine Ausführungsform eines solchen Schnellverschlusselements kann ein - nicht dargestellter - Schnappverschluss sein, bei dem Haken vorgesehen sind, die auf oder in korrespondierende Ausnehmungen einschnappen können, wenn das Trägerelement 3 bei der Montage in seine axiale Endposition gedrückt wird.

Die dargestellte Ausführungsform zeigt ein Schnellverschlusselement 10 in Form eines Bajonett-Verschlusses.

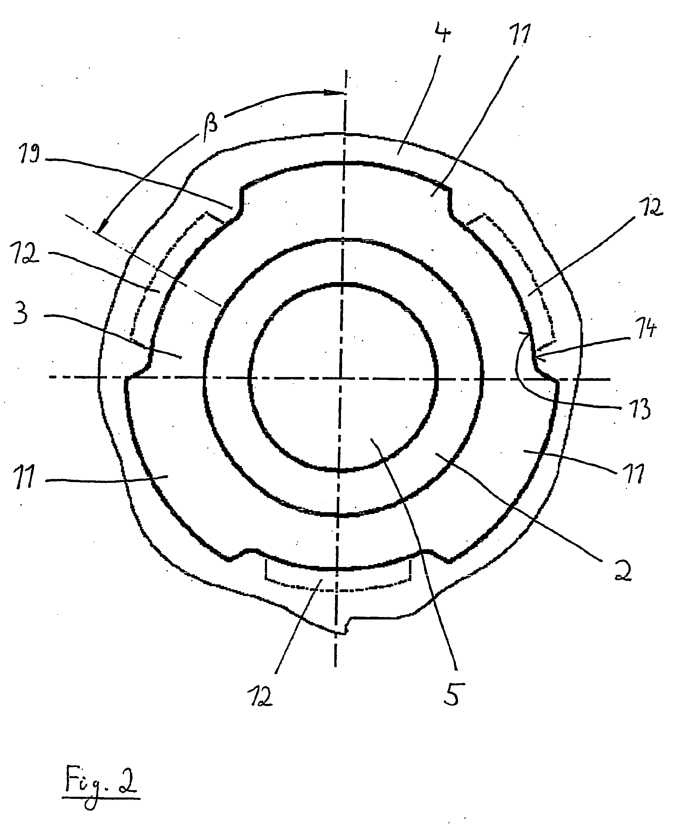

Der Bajonettverschluss 10 hat eine Vielzahl sich radial erstreckender Haken 11, die zu Ausnehmungen 12 passen (s. Fig. 2, dargestellt mit gestrichelten Linien). Im dargestellten Ausführungsbeispiel sind drei Haken 11 und Ausnehmungen 12 vorgesehen, die äquidistant über den Umfang einer Bohrung 13 im Gehäuse 4 angeordnet sind.

Bei der Montage der Dichtungsanordnung 1 wird das Trägerelement 3 mit seinen Haken 11 axial durch die Ausnehmungen 12 gedrückt, und zwar in der Position, die in Fig. 2 mit gestrichelten Linien dargestellt ist. Wenn das Trägerelement 3 seine endgültige axiale Position erreicht hat, wird es um einen Winkel □ von etwa 60° gedreht Hierdurch werden die Haken 11 hinter die Wand 19 des Gehäuses 4 gebracht (dargestellt in Fig. 1), so dass das Trägerelement 3 axial gesichert ist. Um ein unerwünschtes Drehen des Trägerelements 3 relativ zum Gehäuse 4 nach der Montage zu verhindern, kann eine Aussparung oder ein Anschlag in oder am Gehäuse 4 vorgesehen werden (nicht dargestellt).

Um ein präzises Zentrieren des Trägerelements 3 im Gehäuse 4 sicherzustellen, hat das Gehäuse eine zur Welle 5 koaxiale Bohrung 13. Das Trägerelement 3 hat eine äußere Umfangsfläche 14, die relativ zum äußeren Umfang der Haken 11 radial zurückgesetzt ist und die so gefertigt ist, dass sie mit der Bohrung 13 zusammenwirkt, um das Trägerelement 3 im Gehäuse 4 präzise zu positionieren.

Um das Trägerelement 3 gegen das Gehäuse 4 abzudichten, ist ein statisches Dichtungselement 16 vorgesehen. In Fig. 1 ist dieses Element in der Position dargestellt, wenn es nicht montiert ist, d. h. die Lippe 20 steht über die Wand 21 des Gehäuses 4 vor. Dementsprechend wird das statische Dichtungselement 16 im montierten Zustand des Trägerelements 3 und namentlich seine Lippe 20 gegen die Wand 21 des Gehäuses 4 gedrückt, wodurch es deformiert wird und eine gute Dichtungseigenschaft entwickelt.

Das Trägerelement 3 mit seinen Haken 11 ist durch Spritzgießen hergestellt und besteht aus Kunststoff. Es kann auch aus Metall bestehen oder aus einem anderen beispielsweise verstärktem Material. Wie es in Fig. 1 gesehen werden kann, ist das statische Dichtungselement 16 am Trägerelement 3 angebracht. Bei diesem Ausführungsbeispiel ist das statische Dichtungselement 16 mit dem Trägerelement 3 mittels Co-Injektion spritzgegossen oder anschließend an das Trägerelement 3 in der Weise angespritzt, dass eine Abdeckung 17 das Trägerelement 3 an seiner rechten Seite umgibt, wie es in Fig. 1 zu sehen ist. Nach dem Anbringen der Deckschicht 17 an das Trägerelement 3 (beispielsweise durch Spritzgießen) kann das Dichtungselement 2 (PTFE-Hülse) am Trägerelement 3 befestigt werden, beispielsweise durch Kleben.

Um bei sich drehender Welle 5 einen Fluid-(Öl-)Transfer zu erzeugen und so einen Rückfluss des Fluids zur Ölseite 6 sicherzustellen, ist das Dichtungselement 2 mit einer Spiralnut 15 versehen. Dieses Merkmal ist als solches im Stand der Technik bekannt.

Falls notwendig, kann die gesamte Dichtungsanordnung 1 durch Lösen des Bajonettverschlusses 10 demontiert werden, indem die Montageschritte in zur Montage umgekehrter Reihenfolge ausgeführt werden.

### Bezugszeichenliste:

| | |
|---|---|
| 1 | Dichtungsanordnung |
| 2 | Dichtungselement |
| 3 | Trägerelement |
| 4 | Gehäuse |
| 5 | bewegliches Maschinenteil |
| 6 | Ölseite |
| 7 | Luftseite |
| 8 | Ende des Dichtungselements |
| 9 | Ende des Dichtungselements |
| 10 | Schnellverschlusselement |
| 11 | Haken |
| 12 | Ausnehmung |
| 13 | Bohrung |
| 14 | äußerer Umfang des Trägerelements |
| 15 | Spiralnut |
| 16 | statisches Dichtungselement |
| 17 | Abdeckung / Deckschicht |
| 18 | Anfasung |
| 19 | Wand |
| 20 | Lippe |
| 21 | Wand |
| D | erster Durchmesser |
| d | zweiter Durchmesser |
| *β* | Winkel |

## Patentansprüche

1. Dichtungsanordnung (1) mit einem Dichtungselement (2), das an einem Trägerelement (3) angeordnet ist, wobei das Trägerelement (3) mit einem Gehäuse (4) verbunden ist, wobei das Dichtungselement (2) ein bewegliches, insbesondere rotierendes, Maschinenteil (5) kontaktiert, um eine Ölseite (6) gegen eine Luftseite (7) abzudichten, wobei das Dichtungselement (2) zumindest im montierten Zustand eine trichterförmige Gestalt mit einem ersten Durchmesser (D) an einem seiner Enden (8) und einem zweiten, kleineren Durchmesser (d) am anderen seiner Enden (9) hat, wobei das andere Ende (9) mit dem zweiten Durchmesser (d) an die Luftseite (7) der Dichtungsanordnung (1) angrenzend angeordnet ist und wobei das Trägerelement (3) lösbar mit dem Gehäuse (4) mittels eines Schnellverschlusselements (10) verbunden ist, wobei ein statisches Dichtungselement (16) zwischen dem Trägerelement (3) und dem Gehäuse (4) angeordnet ist, und wobei das Dichtungselement (2) und das statische Dichtungselement (16) über eine Abdeckung (17) miteinander verbunden sind, die im wesentlichen das Trägerelement (3) an der Luftseite (7) abdeckt.

2. Dichtungsanordnung nach Anspruch 1, **dadurch gekennzeichnet, dass** das Schnellverschlusselement (10) ein Bajonettverschluss ist.

3. Dichtungsanordnung nach Anspruch 2, **dadurch gekennzeichnet, dass** der Bajonettverschluss eine Vielzahl sich radial erstreckender Haken (11) aufweist, die in Ausnehmungen (12) passen, die vorzugsweise äquidistant entlang des Umfangs einer Bohrung (13) im Gehäuse (4) angeordnet sind.

4. Dichtungsanordnung nach Anspruch 3, **dadurch gekennzeichnet, dass** der Bajonettverschluss (10) drei Haken (11) aufweist.

5. Dichtungsanordnung nach Anspruch 3 oder 4, **dadurch gekennzeichnet, dass** das Trägerelement (3) in der Bohrung (13) des Gehäuses (4) durch zumindest einen Teil seines äußeren Umfangs (14) zentriert ist.

6. Dichtungsanordnung nach Anspruch 1, **dadurch gekennzeichnet, dass** das Schnellverschlusselement (10) ein Schnappverbindungselement aufweist oder ist.

7. Dichtungsanordnung nach einem der Ansprüche 1 bis 6, **dadurch gekennzeichnet, dass** das Dichtungselement (2) aus Polytetraflouräthylen (PTFE) besteht.

8. Dichtungsanordnung nach einem der Ansprüche 1 bis 7, **dadurch gekennzeichnet, dass** das Dichtungselement (2) zumindest an seiner Kontaktoberfläche zu dem Maschinenteil (5) eine Spiralnut (15) oder dergleichen aufweist.

9. Dichtungselement nach einem der Ansprüche 1 bis 8, **dadurch gekennzeichnet, dass** das Material der Abdeckung (17) das Material des statischen Dichtungselements (16) ist.

10. Dichtungsanordnung nach einem der Ansprüche 1 bis 9, **dadurch gekennzeichnet, dass** das Trägerelement (3) aus Kunststoff besteht.

11. Dichtungsanordnung nach einem der Ansprüche 1 bis 10, **dadurch gekennzeichnet, dass** das bewegliche, insbesondere rotierende, Maschinenteil (5) die Welle eines Verbrennungsmotors ist.

## Claims

1. Seal arrangement (1) with a seal element (2) which is arranged on a carrier element (3), the carrier element (3) being connected to a housing (4), the seal element (2) contacting a movable, in particular rotating, machine part (5), in order to seal off an oil side (6) with respect to an air side (7), the seal element (2) having, at least in the mounted state, a funnel-shaped configuration with a first diameter (D) at one of its ends (8) and with a second, smaller diameter (d) at the other of its ends (9), the other end (9) with the second diameter (d) being arranged adjacently to the air side (7) of the seal arrangement (1), and the carrier element (3) being connected releasably to the housing (4) by means of a quick-action fastening element (10), a static seal element (16) being arranged between the carrier element (3) and the housing (4), and the seal element (2) and the static seal element (16) being connected to one another via a cover (17) which covers essentially the carrier element (3) on the air side (7).

2. Seal arrangement according to Claim 1, **characterized in that** the quick-action fastening element (10) is a bayonet fastening.

3. Seal arrangement according to Claim 2, **characterized in that** the bayonet fastening has a multiplicity of radially extending hooks (11) which fit in recesses (12) which are arranged preferably equidistantly along the circumference of a bore (13) in the housing (4).

4. Seal arrangement according to Claim 3, **characterized in that** the bayonet fastening (10) has three hooks (11).

5. Seal arrangement according to Claim 3 or 4, **characterized in that** the carrier element (3) is centred in the bore (13) of the housing (4) by means of at least part of its outer circumference (14).

6. Seal arrangement according to Claim 1, **characterized in that** the quick-action fastening element (10) has or is a snap connection element.

7. Seal arrangement according to one of Claims 1 to 6, **characterized in that** the seal element (2) consists of polytetrafluoroethylene (PTFE).

8. Seal arrangement according to one of Claims 1 to 7, **characterized in that** the seal element (2) has, at least on its surface of contact with the machine part (5), a spiral groove (15) or the like.

9. Seal element according to one of Claims 1 to 8, **characterized in that** the material of the cover (17) is the material of the static seal element (16).

10. Seal arrangement according to one of Claims 1 to 9, **characterized in that** the carrier element (3) consists of plastic.

11. Seal arrangement according to one of Claims 1 to 10, **characterized in that** the movable, in particular rotating, machine part (5) is the shaft of an internal combustion engine.

## Revendications

1. Agencement d'étanchéité (1) comprenant un élément d'étanchéité (2) qui est disposé sur un élément de support (3), l'élément de support (3) étant relié à un boîtier (4), l'élément d'étanchéité (2) étant en contact avec une partie de machine (5) mobile, en particulier rotative, afin de réaliser l'étanchéité d'un côté huile (6) par rapport à un côté air (7), l'élément d'étanchéité (2) ayant au moins à l'état monté une configuration en forme d'entonnoir présentant un premier diamètre (D) à l'une de ses extrémités (8) et un deuxième diamètre plus petit (d) à l'autre de ses extrémités (9), l'autre extrémité (9) présentant le deuxième diamètre (d) étant disposée de manière adjacente au côté air (7) de l'agencement d'étanchéité (1) et l'élément de support (3) étant relié de manière amovible au boîtier (4) au moyen d'un élément de fermeture rapide (10), un élément d'étanchéité statique (16) étant disposé entre l'élément de support (3) et le boîtier (4), et l'élément d'étanchéité (2) et l'élément d'étanchéité statique (16) étant reliés l'un à l'autre au moyen d'un recouvrement (17) qui recouvre essentiellement l'élément de support (3) au niveau du côté air (7).

2. Agencement d'étanchéité selon la revendication 1, **caractérisé en ce que** l'élément de fermeture rapide (10) est une fermeture à baïonnette.

3. Agencement d'étanchéité selon la revendication 2, **caractérisé en ce que** la fermeture à baïonnette comprend une pluralité de crochets (11) s'étendant radialement, lesquels s'insèrent dans des évidements (12) qui sont disposés de préférence de manière équidistante le long de la périphérie d'un alésage (13) dans le boîtier (4).

4. Agencement d'étanchéité selon la revendication 3, **caractérisé en ce que** la fermeture à baïonnette (10) comprend trois crochets (11).

5. Agencement d'étanchéité selon la revendication 3 ou 4, **caractérisé en ce que** l'élément de support (3) est centré dans l'alésage (13) du boîtier (4) par au moins une partie de sa périphérie extérieure (14).

6. Agencement d'étanchéité selon la revendication 1, **caractérisé en ce que** l'élément de fermeture rapide (10) comprend ou est un élément de liaison par encliquetage.

7. Agencement d'étanchéité selon l'une quelconque des revendications 1 à 6, **caractérisé en ce que** l'élément d'étanchéité (2) est constitué de polytétrafluoroéthylène (PTFE).

8. Agencement d'étanchéité selon l'une quelconque des revendications 1 à 7, **caractérisé en ce que** l'élément d'étanchéité (2) comprend, au moins sur sa surface de contact avec la partie de machine (5), une rainure hélicoïdale (15) ou similaire.

9. Agencement d'étanchéité selon l'une quelconque des revendications 1 à 8, **caractérisé en ce que** le matériau du recouvrement (17) est le matériau de l'élément d'étanchéité statique (16).

10. Agencement d'étanchéité selon l'une quelconque des revendications 1 à 9, **caractérisé en ce que** l'élément de support (3) est constitué de plastique.

11. Agencement d'étanchéité selon l'une quelconque des revendications 1 à 10, **caractérisé en ce que** la partie de machine (5) mobile, en particulier rotative, est l'arbre d'un moteur à combustion interne.
